# EUROPEAN PATENT APPLICATION

(11) **EP 4 586 742 A1**
(43) Date of publication of application: **16.07.2025**
(21) Application number: 24151769.7
(22) Date of filing: 15.01.2024
(51) Int. Cl.: H05B 45/37, H02M 3/158

(54) **POWER SUPPLY, SYSTEM COMPRISING THE LATTER, AND CORRESPONDING METHOD FOR SUPPLYING LIGHTING MEANS**

(71) Applicant: Tridonic GmbH & Co. KG, 6851 Dornbirn (AT)
(72) Inventor: Romano, Fabio, 6851 Dornbirn (AT); Schneider, Miguel Philipp, 6851 Dornbirn (AT)
(74) Representative: Rupp, Christian

(57) **Abstract**

A power supply (10) for supplying lighting means (12) is provided. Said power supply (10) comprises at least two constant voltage power modules (11a, 11b, ..., 11N) connected in parallel to form a common power output with a total power. In this context, the at least two constant voltage power modules (11a, 11b, ..., 11N) are configured such that the total power is distributed over the at least two constant voltage power modules (11a, 11b, ..., 11N) in an asymmetric manner.

## Description

The invention relates to a power supply for supplying lighting means, a system comprising such a power supply, and a power supply method for supplying lighting means.

Generally, in times of an increasing number of applications employing lighting means, especially LED lighting means, there is a growing need of a power supply, a system comprising such a power supply, and a power supply method not only for supplying such lighting means in a particularly efficient manner but also ensuring that even higher loads can reliably be supplied.

In this context, it is common practice to combine multiple drivers, wherein each driver contributes the same proportion of the total electrical power, e.g. to achieve even wear of the drivers. Within the scope of the common practice, it has not even been recognized that such a configuration disadvantageously leads to a reduced total efficiency.

Accordingly, there is the object to provide a power supply for supplying lighting means, a system comprising such a power supply, and a power supply method for supplying lighting means in order to allow for achieving a particularly high efficiency, especially a maximized total efficiency, and reliability, especially in the context of supplying higher loads.

This object is solved by the features of the first independent claim for the power supply, the features of the second independent claim for the system, and the features of the third independent claim for the power supply method. The dependent claims contain further developments.

According to a first aspect of the invention, a power supply for supplying lighting means is provided. Said power supply comprises at least two constant voltage power modules connected in parallel to form a common power output with a total power. In this context, the at least two constant voltage power modules are configured such that the total power is distributed over the at least two constant voltage power modules in an asymmetric manner. Advantageously, a particularly high efficiency, especially a maximized total efficiency, and reliability, especially in the context of supplying higher loads, can be achieved. Further advantageously, less power loss and lower energy consumption can be achieved.

According to an implementation form of the first aspect of the invention, especially for asymmetrically distributing the total power over the at least two constant voltage power modules, at least one of the at least two constant voltage power modules is configured to be deactivatable and/or disabled. Advantageously, for instance, complexity can be reduced, thereby increasing efficiency.

According to a further implementation form of the first aspect of the invention, especially for asymmetrically distributing the total power over the at least two constant voltage power modules, the respective output power of at least one of the at least two constant voltage power modules deviates from the respective output power of the other ones of the at least two constant voltage power modules by at least 40 per cent, preferably by at least 50 per cent, more preferably by at least 60 per cent, most preferably by at least 70 per cent or by at least 85 per cent. Advantageously, for example, especially in the light of the respective efficiency curves of the constant voltage power modules, a particularly high flexibility with respect to the configuration of the power supply can be achieved, which leads to an increased efficiency.

According to a further implementation form of the first aspect of the invention, the total power is distributed over the at least two constant voltage power modules in the asymmetric manner such that the asymmetric distribution differs from the corresponding case of a symmetric distribution by at least 10 per cent, preferably by at least 20 per cent, more preferably by at least 30 per cent, most preferably by at least 40 per cent, especially with respect to at least one of the at least two constant voltage power modules. Advantageously, for instance, the power supply can be configured in a simple manner, thereby increasing efficiency.

According to a further implementation form of the first aspect of the invention, the at least two constant voltage power modules are identical or substantially identical with respect to each other. Advantageously, for example, complexity can be reduced, which leads to an increased efficiency.

With respect to the foregoing term "substantially identical", it is noted that said term can especially be understood as a deviation of not more than 10 per cent, preferably not more than 5 per cent, more preferably not more than 3 per cent, most preferably not more than 1 per cent, especially with respect to the corresponding characteristics of the at least two constant voltage power modules.

According to a further implementation form of the first aspect of the invention, the asymmetric distribution of the total power is permutated with respect to the at least two constant voltage power modules such that the respective output power of each of the at least two constant voltage power modules is symmetrically or substantially symmetrically distributed on average over time. Advantageously, for instance, even ageing of the constant voltage power modules can efficiently be achieved.

With respect to the foregoing term "substantially symmetrically", it is noted that said term can especially be understood as a deviation of not more than 10 per cent, preferably not more than 5 per cent, more preferably not more than 3 per cent, most preferably not more than 1 per cent, especially from the corresponding symmetrical distribution.

According to a further implementation form of the first aspect of the invention, at least one, preferably each, of the at least two constant voltage power modules comprises a pre-configuration adapted to distribute the total power over the at least two constant voltage power modules in the asymmetric manner and/or, especially in the case of the foregoing implementation form, to permutate the asymmetric distribution of the total power. Advantageously, for example, a central control of the power supply or the constant voltage power modules is not necessarily to be omitted but can be omitted, thereby reducing complexity and saving costs.

According to a further implementation form of the first aspect of the invention, the power supply further comprises a control unit, and/or an interface being connectable and/or connected to a control device. In this context, the control unit is configured to distribute the total power over the at least two constant voltage power modules in the asymmetric manner according to control data and/or, especially in the case of two foregoing implementation forms, to permutate the asymmetric distribution of the total power according to the control data. In addition to this or as an alternative, the interface is configured to receive external control data from the control device to distribute the total power over the at least two constant voltage power modules in the asymmetric manner and/or, especially in the case of the two foregoing implementation forms, to permutate the asymmetric distribution of the total power. Advantageously, for instance, a central control can further increase efficiency, especially total efficiency.

According to a further implementation form of the first aspect of the invention, the control data comprises and/or is based on at least one of a temperature, especially an inner temperature, with respect to at least one, preferably each, of the at least two constant voltage power modules, a respective timespan, wherein at least one, preferably each, of the at least two constant voltage power modules, have been used, a respective timespan, wherein at least one, preferably each, of the at least two constant voltage power modules is to be used, the respective output power of at least one, preferably each, of the at least two constant voltage power modules, the respective efficiency, especially the respective efficiency graph, of at least one, preferably each, of the at least two constant voltage power modules, a total efficiency to be achieved by the power supply, at least two load ranges with respect to the power supply, an event, especially a restart of the power supply or of at least one of the at least two constant voltage power modules, or any combination thereof. Advantageously, for example, even ageing of the constant voltage power modules can efficiently be enabled, which can analogously apply for the following implementation form.

According to a further implementation form of the first aspect of the invention, the external control data comprises and/or is based on at least one of a temperature, especially an inner temperature, with respect to at least one, preferably each, of the at least two constant voltage power modules, a respective timespan, wherein at least one, preferably each, of the at least two constant voltage power modules, have been used, a respective timespan, wherein at least one, preferably each, of the at least two constant voltage power modules is to be used, the respective output power of at least one, preferably each, of the at least two constant voltage power modules, the respective efficiency, especially the respective efficiency graph, of at least one, preferably each, of the at least two constant voltage power modules, a total efficiency to be achieved by the power supply, at least two load ranges with respect to the power supply, an event, especially a restart of the power supply or of at least one of the at least two constant voltage power modules, or any combination thereof.

According to a second aspect of the invention, a system is provided. Said system comprises a power supply according to the first aspect of the invention or any of its implementation forms, respectively, and lighting means, especially LED lighting means, supplied by said power supply. Advantageously, a particularly high efficiency, especially a maximized total efficiency, and reliability, especially in the context of supplying higher loads, can be achieved. Further advantageously, less power loss and lower energy consumption can be achieved.

According to an implementation form of the second aspect of the invention, the power supply and the lighting means are arranged on the same circuit board and/or within the same housing. Advantageously, for instance, compactness can be increased, which leads to an increased flexibility.

According to a further implementation form of the second aspect of the invention, the system further comprises a control device configured to control the power supply, especially by providing external control data for the power supply. Advantageously, for example, said control device or said external control data, respectively, can comprise or be the control device or external control data, respectively, as explained within the scope of the first aspect of the invention.

According to a further implementation form of the second aspect of the invention, the lighting means and the control device are arranged on the same circuit board and/or within the same housing. In addition to this or as an alternative, the power supply and the control device are arranged on the same circuit board and/or within the same housing.

Advantageously, for instance, space requirements can further be reduced, thereby increasing flexibility.

According to a third aspect of the invention, a power supply method for supplying lighting means is provided. Said power supply method comprises the steps of connecting at least two constant voltage power modules in parallel to form a common power output with a total power, and configuring the at least two constant voltage power modules such that the total power is distributed over the at least two constant voltage power modules in an asymmetric manner. Advantageously, a particularly high efficiency, especially a maximized total efficiency, and reliability, especially in the context of supplying higher loads, can be achieved. Further advantageously, less power loss and lower energy consumption can be achieved.

Exemplary embodiments of the invention are now further explained with respect to the drawings by way of example only, and not for limitation. In the drawings:
- Fig. 1: shows an exemplary embodiment of a power supply in combination with an exemplary embodiment of a system comprising said power supply;
- Fig. 2: shows an exemplary efficiency graph of a constant voltage power module;
- Fig. 3: shows a further exemplary embodiment of a power supply in combination with a further exemplary embodiment of a system comprising said power supply;
- Fig. 4: shows an exemplary characteristic curve with respect to a power supply; and
- Fig. 5: shows a flow chart of an exemplary embodiment of a power supply method.

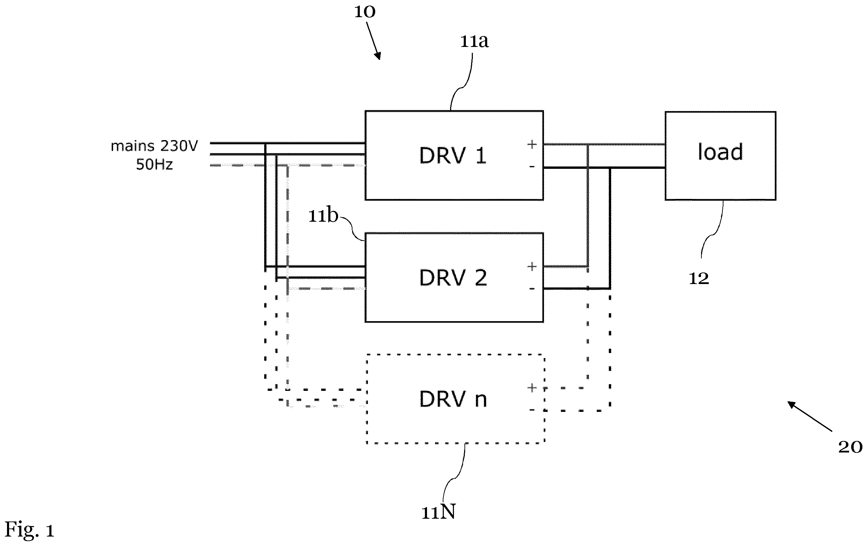

With respect to Fig. 1, an exemplary embodiment of a power supply 10 for supplying a load 12, exemplarily lighting means, especially LED lighting means, is shown. In addition to this, said Fig. 1 illustrates an exemplary embodiment of a system 20 comprising the power supply 10 and the load 12 or the lighting means, respectively.

As it can be seen from Fig. 1, said power supply 10 comprises at least two constant voltage power modules, exemplarily N constant voltage power modules, 11a, 11b, ..., 11N connected in parallel to form a common power output with a total power.

In this context, the at least two constant voltage power modules or the N constant voltage power modules 11a, 11b, ..., 11N, respectively, are configured such that the total power is distributed over the at least two constant voltage power modules or the N constant voltage power modules 11a, 11b, ..., 11N, respectively, in an asymmetric manner.

It is noted that it might be particularly advantageous if, especially for asymmetrically distributing the total power over the at least two constant voltage power modules, at least one, preferably one, of the at least two constant voltage power modules or of the N constant voltage power modules 11a, 11b, ..., 11N, respectively, is configured to be deactivatable and/or disabled. In this context, a corresponding asymmetry ratio may especially be set to 0/100.

Accordingly, an asymmetry can be achieved in a manner that (at least) one of the at least two constant voltage power modules or of the N constant voltage power modules 11a, 11b, ..., 11N, respectively, connected in parallel is switched off completely. The remaining constant voltage power module(s) will then be more heavily utilized, which advantageously leads to a higher total efficiency.

It is further noted that it might be particularly advantageous if, especially for asymmetrically distributing the total power over the at least two constant voltage power modules or the N constant voltage power modules 11a, 11b, ..., 11N, respectively, the respective output power of at least one of the at least two constant voltage power modules or the N constant voltage power modules 11a, 11b, ..., 11N, respectively, deviates from the respective output power of the remaining constant voltage power module(s) by at least 40 per cent, preferably by at least 50 per cent, more preferably by at least 60 per cent, most preferably by at least 70 per cent or by at least 85 per cent.

For instance, in this context, a corresponding asymmetry ratio may especially be set to 30/70.

Moreover, it might be particularly advantageous if the total power is distributed over the at least two constant voltage power modules or the N constant voltage power modules 11a, 11b, ..., 11N, respectively, in the asymmetric manner such that the asymmetric distribution differs from the corresponding case of a symmetric distribution by at least 10 per cent, preferably by at least 20 per cent, more preferably by at least 30 per cent, most preferably by at least 40 per cent, especially with respect to at least one of the at least two constant voltage power modules or of the N constant voltage power modules 11a, 11b, ..., 11N, respectively.

Furthermore, in accordance with this exemplary case of Fig. 1, the at least two constant voltage power modules or the N constant voltage power modules 11a, 11b, ..., 11N, respectively, are identical or substantially identical with respect to each other.

With respect to the foregoing term "substantially identical", it is noted that said term can especially be understood as a deviation of not more than 10 per cent, preferably not more than 5 per cent, more preferably not more than 3 per cent, most preferably not more than 1 per cent, especially with respect to the corresponding characteristics of the at least two constant voltage power modules or of the N constant voltage power modules 11a, 11b, ..., 11N, respectively.

Moreover, also in accordance with this exemplary case of Fig. 1, each of the at least two constant voltage power modules or the N constant voltage power modules 11a, 11b, ..., 11N, respectively is configured regulate to a constant output voltage, especially wherein the corresponding setpoint values are identical or substantially identical.

By analogy with the explanations above, it is noted that the foregoing term "substantially identical" can especially be understood as a deviation of not more than 10 per cent, preferably not more than 5 per cent, more preferably not more than 3 per cent, most preferably not more than 1 per cent, especially with respect to the corresponding setpoint values of the at least two constant voltage power modules or of the N constant voltage power modules 11a, 11b, ..., 11N, respectively.

It is further noted that it might be particularly advantageous if the asymmetric distribution of the total power is permutated with respect to the at least two constant voltage power modules or the N constant voltage power modules 11a, 11b, ..., 11N, respectively, such that the respective output power of each of the at least two constant voltage power modules or the N constant voltage power modules 11a, 11b, ..., 11N, respectively, is symmetrically or substantially symmetrically distributed on average over time. In this context, the corresponding asymmetry ratio can exemplarily be switched depending on events, such as a restart of the power supply 10 or of at least one of the at least two constant voltage power module or of the N constant voltage power modules 11a, 11b, ..., 11N, respectively, or time sequences, such as triggered by a timer or a duration or a timespan.

With respect to the foregoing term "substantially symmetrically", it is noted that said term can especially be understood as a deviation of not more than 10 per cent, preferably not more than 5 per cent, more preferably not more than 3 per cent, most preferably not more than 1 per cent, especially from the corresponding symmetrical distribution.

It is further noted that it might be particularly advantageous if at least one, preferably each, of the at least two constant voltage power modules or of the N constant voltage power modules 11a, 11b, ..., 11N, respectively, comprises a pre-configuration adapted to distribute the total power over the at least two constant voltage power modules or the N constant voltage power modules 11a, 11b, ..., 11N, respectively, in the asymmetric manner and/or to permutate the asymmetric distribution of the total power with respect to the at least two constant voltage power modules or the N constant voltage power modules 11a, 11b, ..., 11N, respectively, such that the respective output power of each of the at least two constant voltage power modules or the N constant voltage power modules 11a, 11b, ..., 11N, respectively, is symmetrically or substantially symmetrically distributed on average over time.

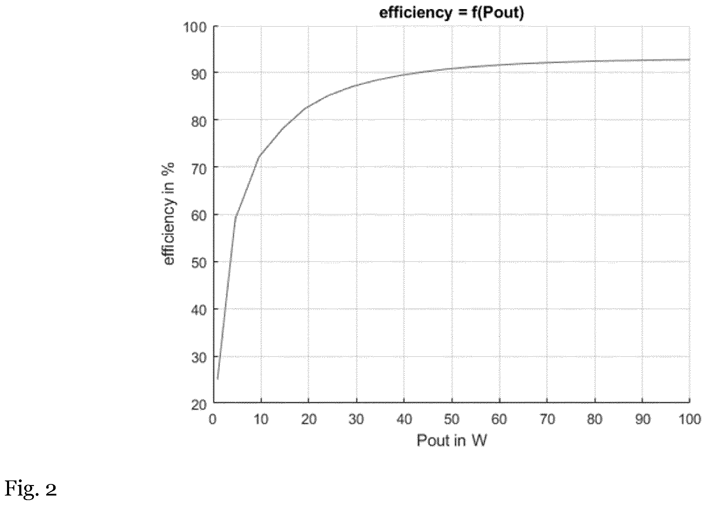

Furthermore, especially in the light of Fig. 1, and Fig. 2 that shows an exemplary efficiency graph of a constant voltage power module, exemplarily of the N constant voltage power modules 11a, 11b, ..., 11N, as a function of the respective output power, some use cases or operation modes, respectively, are explained based on exemplary numerical values in the following. In this context, it assumed that N=3. Accordingly, in the following, it is assumed that the power supply 10 comprises three constant voltage power modules.

In accordance with a first exemplary use case or operation mode, respectively, unneeded constant voltage power modules are deactivated if possible.

For instance, in this context, each of the three constant voltage power modules has 100 W output power. The load 12 exemplarily is 140 W. Only two of the three constant voltage power modules are working. The third constant voltage power module exemplarily remains in standby and has only minimal losses. The remaining two (active) constant voltage power modules operate at 70 W each and deliver a total load of 140 W.

Looking at the characteristic curve according to the above-mentioned Fig. 2, both (active) constant voltage power modules then operate at approximately 92 %, which is also the system efficiency or total efficiency, respectively.

If all three constant voltage power modules were to work especially in a symmetrical manner (140W / 3 = 46W), the system efficiency or total efficiency, respectively, would only be 90%. Depending on which operating points result, the difference in efficiency increase can also be considerably greater.

Moreover, in accordance with a second exemplary use case or operation mode, respectively, load is distributed unevenly or asymmetrically, respectively, across all constant voltage power modules that are in operation.

This use case or operation mode, respectively, may especially depend on the efficiency characteristics of the constant voltage power modules. For example, depending on the topology and/or operating point and/or design, there may be efficiency characteristics that favor this use case or operation mode, respectively.

For instance, especially from a system perspective, it may then make sense for one of the three constant voltage power modules to work at 40 % output power and another one of the tree constant voltage power modules to work at 90 % output power, whereas the third one of the constant voltage power module is exemplarily switched off or in standby, respectively, as described under the first use case or operation mode, respectively, above.

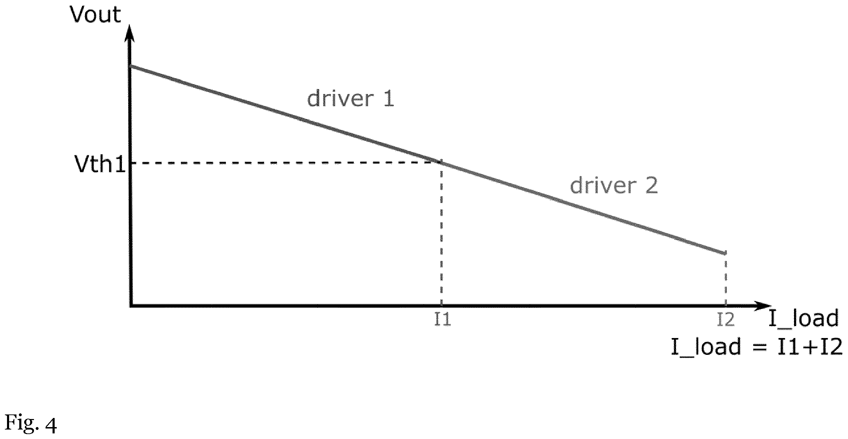

It is further noted that it might be particularly advantageous if a voltage droop control mode is implemented by the power supply 10. Fig. 4 illustrates an exemplary characteristic curve for such a voltage droop control mode. In this context, whereas the third constant voltage power module is still switched off or alternatively omitted, the first constant voltage power module or "driver 1", respectively, takes over the entire load up to a first current value "I1". The second constant voltage power module or "driver 2", respectively, remains deactivated. The corresponding output voltage "Vout" is measured by both (active) constant voltage power modules or drivers, respectively. If said output voltage "Vout" falls below a certain value, exemplarily the threshold voltage "Vth1", the second constant voltage power module or "driver 2", respectively, also starts to supply current. In this context, "I1" symbolizes the maximum current of the first constant voltage power module or "driver 1", respectively.

Advantageously, a central control is not necessary. The corresponding behavior is especially controlled by the respective characteristic curves. For the sake of completeness, it should be noted that even if any central control is not necessary, especially for the voltage droop control mode, a control unit or a control device, respectively, can however be used especially in this context.

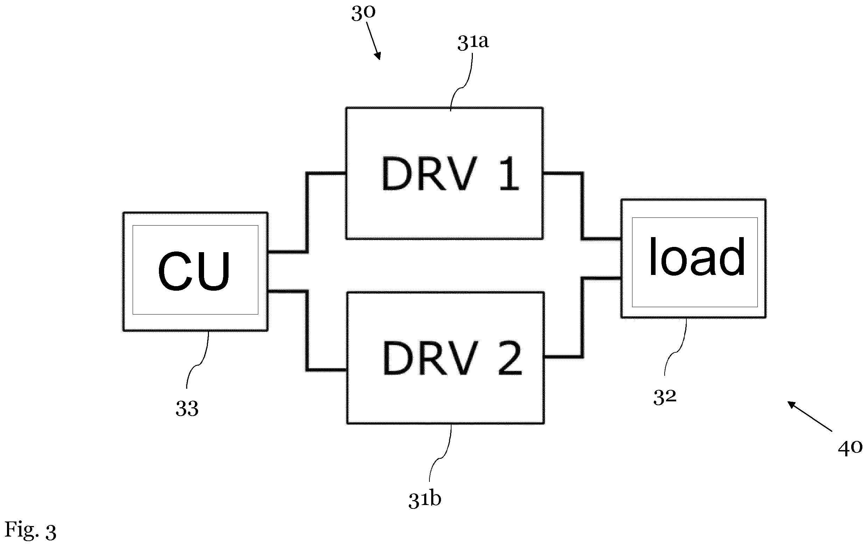

Now, with respect to Fig. 3, a further exemplary embodiment of a power supply 30 in combination with a further exemplary embodiment of a system 40 comprising said power supply 30 and a load 32, exemplarily lighting means or LED lighting means, supplied by the power supply 30.

The power supply 30 comprises a first constant voltage power module 31a, a second constant voltage power module 31b, and a control unit 33.

The two constant voltage power modules 31a, 31b are connected in parallel to form a common power output with a total power and configured such that the total power is distributed over the two constant voltage power modules 31a, 31b in an asymmetric manner.

It is noted that the explanations above regarding the N constant voltage power modules 11a, 11b, ..., 11N of Fig. 1 can analogously apply for the two constant voltage power modules 31a, 31b of Fig. 3, and vice versa.

As it can further be seen from Fig. 3, the control unit 33 is connected to each of the constant voltage power modules 31a, 31b.

Said control unit 33 is configured to distribute the total power over the two constant voltage power modules 31a, 31b in the asymmetric manner according to control data and/or to permutate the asymmetric distribution of the total power with respect to the two constant voltage power modules 31a, 31b such that the respective output power of each of the two constant voltage power modules 31a, 31b is symmetrically or substantially symmetrically distributed on average over time according to the control data.

In addition to or as an alternative of the control unit 33, the power supply 30 can especially comprise an interface being connectable and/or connected to a control device. For instance, the system 40 can comprise such a control device. It is noted that the explanations regarding the control unit 33 can analogously apply for the control device, and vice versa.

It is further noted that it might be particularly advantageous if the interface is configured to receive external control data from the control device to distribute the total power over the two constant voltage power modules 31a, 31b in the asymmetric manner and/or to permutate the asymmetric distribution of the total power with respect to the two constant voltage power modules 31a, 31b such that the respective output power of each of the two constant voltage power modules 31a, 31b is symmetrically or substantially symmetrically distributed on average over time. In other words, the distribution of the total power and/or the permutation of the asymmetric distribution may especially be based on the external control data.

Accordingly, the control unit 33 and/or the control device can especially take over the corresponding distribution especially in the form of a central control. In this context, it might be particularly advantageous if the constant voltage power modules 31a, 31b are configured to continuously measure their own output current and/or voltage. Furthermore, it might be particularly advantageous if the control unit 33 or the control device, respectively, is configured to query said output current and/or voltage and to distribute the corresponding load accordingly.

With respect to the above-mentioned control data, it is noted that it might be particularly advantageous if the control data comprises and/or is based on at least one of a temperature, especially an inner temperature, with respect to at least one, preferably each, of the at least two constant voltage power modules, a respective timespan, wherein at least one, preferably each, of the at least two constant voltage power modules, have been used, a respective timespan, wherein at least one, preferably each, of the at least two constant voltage power modules is to be used, the respective output power of at least one, preferably each, of the at least two constant voltage power modules, the respective efficiency, especially the respective efficiency graph, of at least one, preferably each, of the at least two constant voltage power modules, a total efficiency to be achieved by the power supply, at least two load ranges with respect to the power supply, an event, especially a restart of the power supply or of at least one of the at least two constant voltage power modules, or any combination thereof.

For instance, especially in the context of control data comprising the above-mentioned respective timespan(s), it is noted that it might be particularly advantageous if the power supply 30 is configured to alternate or permutate, respectively, the constant voltage power modules 31a, 31b within predefined time intervals during load distribution especially to enable even ageing.

Further exemplarily, especially in the context of control data comprising the above-mentioned load ranges and/or temperature, it is noted that it might be particularly advantageous if the power supply 30 is configured to change the load redistribution, especially not only according to a fixed defined time interval, but also according to the actual load and/or temperature inside the constant voltage power modules 31a, 31b.

With respect to the above-mentioned external control data, it is noted that the explanations regarding the control data can analogously apply for the external control data, and vice versa.

It is further noted that it might be particularly advantageous if the power supply 30 and the load 32 or lighting means, respectively, are arranged on the same circuit board and/or within the same housing.

In addition to this or as an alternative, the load 32 or lighting means, respectively, and the control unit 33 or control device, respectively, can be arranged on the same circuit board and/or within the same housing.

Further additionally or further alternatively, the power supply 30 and the control unit 33 or control device, respectively, can be arranged on the same circuit board and/or within the same housing.

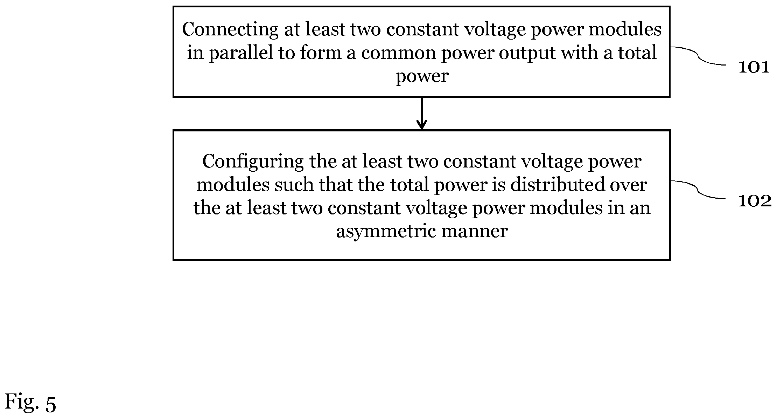

Finally, Fig. 5 shows a flow chart of an exemplary embodiment of the power supply method for supplying lighting means such as the above-mentioned load or lighting means, respectively, 12 or 32 according to Fig. 1 or Fig. 3. A first step 101 comprises connecting at least two constant voltage power modules, such as the above-mentioned constant voltage power modules 11a, 11b, ..., 11N of Fig. 1 or the constant voltage power modules 31a, 31b of Fig. 3, in parallel to form a common power output with a total power. Furthermore, a second step 102 comprises configuring the at least two constant voltage power modules such that the total power is distributed over the at least two constant voltage power modules in an asymmetric manner.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A power supply (10, 30) for supplying lighting means (12, 32), comprising:
at least two constant voltage power modules (11a, 11b, ..., 11N, 31a, 31b) connected in parallel to form a common power output with a total power,
wherein the at least two constant voltage power modules (11a, 11b, ..., 11N, 31a, 31b) are configured such that the total power is distributed over the at least two constant voltage power modules (11a, 11b, ..., 11N, 31a, 31b) in an asymmetric manner.

2. The power supply (10, 30) according to claim 1, wherein, especially for asymmetrically distributing the total power over the at least two constant voltage power modules (11a, 11b, ..., 11N, 31a, 31b), at least one of the at least two constant voltage power modules (11a, 11b, ..., 11N, 31a, 31b) is configured to be deactivatable and/or disabled.

3. The power supply (10, 30) according to claim 1 or 2, wherein, especially for asymmetrically distributing the total power over the at least two constant voltage power modules (11a, 11b, ..., 11N, 31a, 31b), the respective output power of at least one of the at least two constant voltage power modules (11a, 11b, ..., 11N, 31a, 31b) deviates from the respective output power of the other ones of the at least two constant voltage power modules (11a, 11b, ..., 11N, 31a, 31b) by at least 40 per cent, preferably by at least 50 per cent, more preferably by at least 60 per cent, most preferably by at least 70 per cent or by at least 85 per cent.

4. The power supply (10, 30) according to any of the claims 1 to 3,
wherein the total power is distributed over the at least two constant voltage power modules (11a, 11b, ..., 11N, 31a, 31b) in the asymmetric manner such that the asymmetric distribution differs from the corresponding case of a symmetric distribution by at least 10 per cent, preferably by at least 20 per cent, more preferably by at least 30 per cent, most preferably by at least 40 per cent, especially with respect to at least one of the at least two constant voltage power modules (11a, 11b, ..., 11N, 31a, 31b).

5. The power supply (10, 30) according to any of the claims 1 to 4,
wherein the at least two constant voltage power modules (11a, 11b, ..., 11N, 31a, 31b) are identical or substantially identical with respect to each other.

6. The power supply (10, 30) according to any of the claims 1 to 5,
wherein the asymmetric distribution of the total power is permutated with respect to the at least two constant voltage power modules (11a, 11b, ..., 11N, 31a, 31b) such that the respective output power of each of the at least two constant voltage power modules (11a, 11b, ..., 11N, 31a, 31b) is symmetrically or substantially symmetrically distributed on average over time.

7. The power supply (10, 30) according to any of the claims 1 to 6,
wherein at least one, preferably each, of the at least two constant voltage power modules (11a, 11b, ..., 11N, 31a, 31b) comprises a pre-configuration adapted to distribute the total power over the at least two constant voltage power modules (11a, 11b, ..., 11N, 31a, 31b) in the asymmetric manner and/or, especially in the case of claim 6, to permutate the asymmetric distribution of the total power.

8. The power supply (10, 30) according to any of the claims 1 to 7, further comprising:
a control unit (33), and/or
an interface being connectable and/or connected to a control device,
wherein the control unit (33) is configured to distribute the total power over the at least two constant voltage power modules (11a, 11b, ..., 11N, 31a, 31b) in the asymmetric manner according to control data and/or, especially in the case of claim 6 or 7, to permutate the asymmetric distribution of the total power according to the control data, and/or
wherein the interface is configured to receive external control data from the control device to distribute the total power over the at least two constant voltage power modules (11a, 11b, ..., 11N, 31a, 31b) in the asymmetric manner and/or, especially in the case of claim 6 or 7, to permutate the asymmetric distribution of the total power.

9. The power supply (10, 30) according to claim 8,
wherein the control data comprises and/or is based on at least one of a temperature, especially an inner temperature, with respect to at least one, preferably each, of the at least two constant voltage power modules (11a, 11b, ..., 11N, 31a, 31b), a respective timespan, wherein at least one, preferably each, of the at least two constant voltage power modules (11a, 11b, ..., 11N, 31a, 31b), have been used, a respective timespan, wherein at least one, preferably each, of the at least two constant voltage power modules (11a, 11b, ..., 11N, 31a, 31b) is to be used, the respective output power of at least one, preferably each, of the at least two constant voltage power modules (11a, 11b, ..., 11N, 31a, 31b), the respective efficiency, especially the respective efficiency graph, of at least one, preferably each, of the at least two constant voltage power modules (11a, 11b, ..., 11N, 31a, 31b), a total efficiency to be achieved by the power supply, at least two load ranges with respect to the power supply, an event, especially a restart of the power supply (10, 30) or of at least one of the at least two constant voltage power modules (11a, 11b, ..., 11N, 31a, 31b), or any combination thereof.

10. The power supply (10, 30) according to claim 8 or 9, wherein the external control data comprises and/or is based on at least one of a temperature, especially an inner temperature, with respect to at least one, preferably each, of the at least two constant voltage power modules (11a, 11b, ..., 11N, 31a, 31b), a respective timespan, wherein at least one, preferably each, of the at least two constant voltage power modules (11a, 11b, ..., 11N, 31a, 31b), have been used, a respective timespan, wherein at least one, preferably each, of the at least two constant voltage power modules (11a, 11b, ..., 11N, 31a, 31b) is to be used, the respective output power of at least one, preferably each, of the at least two constant voltage power modules (11a, 11b, ..., 11N, 31a, 31b), the respective efficiency, especially the respective efficiency graph, of at least one, preferably each, of the at least two constant voltage power modules (11a, 11b, ..., 11N, 31a, 31b), a total efficiency to be achieved by the power supply, at least two load ranges with respect to the power supply, an event, especially a restart of the power supply (10, 30) or of at least one of the at least two constant voltage power modules (11a, 11b, ..., 11N, 31a, 31b), or any combination thereof.

11. A system (20, 40) comprising:
a power supply (10, 30) according to any of the claims 1 to 10, and
lighting means (12, 32), especially LED lighting means, supplied by said power supply (10, 30).

12. The system (20, 40) according to claim 11,
wherein the power supply (10, 30) and the lighting means (12, 32) are arranged on the same circuit board and/or within the same housing.

13. The system (20, 40) according to claim 11 or 12, further comprising:
a control device configured to control the power supply (10, 30), especially by providing external control data for the power supply (10, 30).

14. The system (20, 40) according to claim 13,
wherein the lighting means (12, 32) and the control device are arranged on the same circuit board and/or within the same housing, and/or
wherein the power supply (10, 30) and the control device are arranged on the same circuit board and/or within the same housing.

15. A power supply method for supplying lighting means, comprising the steps of:
connecting (101) at least two constant voltage power modules (11a, 11b, ..., 11N, 31a, 31b) in parallel to form a common power output with a total power, and
configuring (102) the at least two constant voltage power modules (11a, 11b, ..., 11N, 31a, 31b) such that the total power is distributed over the at least two constant voltage power modules (11a, 11b, ..., 11N, 31a, 31b) in an asymmetric manner.
